# EUROPÄISCHE PATENTSCHRIFT

(11) **EP 1 420 997 B1**
(45) Veröffentlichungstag und Bekanntmachung des Hinweises auf die Patenterteilung: **08.03.2006**
(21) Anmeldenummer: 02769891.9
(22) Anmeldetag: 23.08.2002
(51) Int. Cl.: B62D 33/00, B60J 5/00, F16B 5/12, H01B 7/00, B60R 16/02

(54) **KRAFTFAHRZEUG-BAUGRUPPE**
MOTOR VEHICLE SUB-ASSEMBLY
ENSEMBLE DE VEHICULE AUTOMOBILE

(30) Priorität: 23.08.2001 DE 10142835; 20.08.2002 DE 10238020
(43) Veröffentlichungstag der Anmeldung: 26.05.2004
(73) Patentinhaber: Brose Fahrzeugteile GmbH & Co. KG, Coburg, 96450 Coburg (DE)
(72) Erfinder: SALHOFF, Thomas, 96103 Hallstadt (DE); SCHWARZ, Martin, 96450 Coburg (DE)
(74) Vertreter: Baumgärtel, Gunnar
(86) Internationale Anmeldenummer: PCT/DE2002/003158
(87) Internationale Veröffentlichungsnummer: WO 2003/018387

(56) Entgegenhaltungen:
- EP-A- 0 833 063
- EP-A- 1 104 720
- DE-U- 20 118 469

## Beschreibung

Die Erfindung betrifft eine Kraftfahrzeug-Baugruppe, insbesondere eine Baugruppe für eine Kraftfahrzeugtür (Türbaugruppe), nach dem Oberbegriff des Patentanspruchs 1 sowie eine Bauteilverbindung nach dem Oberbegriff des Anspruchs 23.

Eine derartige Baugruppe bzw. Bauteilverbindung umfaßt ein flächig ausgebildetes, tragendes Element sowie eine an diesem tragenden Element befestigte Leiteranordnung, die beispielsweise zur Bestromung elektrischer Komponenten eines Fahrzeugs oder zur Signalübermittlung dienen kann.

Es ist eine Vielzahl unterschiedlicher Maßnahmen zur Befestigung von Leitungen an Elementen eines Kraftfahrzeugs oder anderen tragenden Elementen bekannt. Ein Beispiel hierfür ist die Verwendung von Klipselementen, die einerseits die zu befestigende Leitung umgreifen und andererseits in eine Öffnung des zur Aufnahme der Leitung dienenden Elementes eingreifen. Hierbei besteht jedoch das Problem, daß in vielen Fällen die dem Klipselement zugeordnete Befestigungsöffnung abgedichtet werden muß, z.B. wenn die Leitung an einem tragenden Türelement (Türinnenblech oder Türmodulträger) befestigt werden soll, das zur Trennung des Trockenraums vom Naßraum einer Fahrzeugtür dient.

Aus der DE 200 14 701 U1 ist ein selbstklebendes elektrisches oder optisches Kabel bekannt, das mittels einer klebenden Schicht an einem Kraftfahrzeugteil befestigbar ist. Hierzu muß dessen Oberfläche jedoch hinreichend fett- und ölfrei sein.

Die EP 1 104 720 A1 beschreibt ein Verfahren zur Befestigung einer Flachleitung an einem Formträgerteil. In einem Formpresswerkzeug werden die Leitungen eingelegt, wobei Stecker und solche Leitungsabschnitte, die frei bleiben sollen, in Vertiefungen des Werkzeuges liegen. Darüber wird eine Kunststoffmatrix gelegt, die mit einem oberen Stempel in die Endform gepresst wird. Dabei werden gleichzeitig die unter der Kunststoffmatrix liegenden Leitungen mit eingepresst. Nach dem Aushärten des Kunststoffes sind die Leitungen fest mit dem Kunststoff verbunden.

Der Erfindung liegt das Problem zugrunde, eine Baugruppe der eingangs genannten Art zu schaffen, die in einfacher Weise eine Befestigung einer Leiteranordnung an einem tragenden Element ermöglicht.

Dieses Problem wird erfindungsgemäß durch die Schaffung einer Baugruppe mit den Merkmalen des Patentanspruchs 1 gelöst.

Danach sind mindestens ein Befestigungsabschnitt der Leiterbahnanordnung und ein zugeordneter Abschnitt des tragenden Elementes derart plastisch verformt, daß sie ineinander greifen, wodurch die Leiteranordnung an dem tragenden Element gehalten wird. Es handelt sich also um eine durch Umformen der entsprechenden Materialabschnitte geschaffene Verbindung (Fügen durch Umformen).

Die erfindungsgemäße Lösung hat den Vorteil, daß eine Verbindung zwischen einer Leiteranordnung und einem die Leiteranordnung tragenden Element in einfacher Weise durch gemeinsame plastische Verformung eines Abschnittes der Leiteranordnung sowie eines Abschnittes des tragenden Elementes geschaffen werden kann.

Unter einer Leiteranordnung werden hier beliebige Leiterkonfigurationen verstanden, also beispielsweise sowohl ein einzelner elektrischer Leiter als auch eine Mehrzahl auf einem Träger nebeneinander angeordneter elektrischer Leiter. Die Leiteranordnung kann dabei insbesondere durch Flachleiter, die auf einem flexiblen Träger in Form einer Folie angeordnet sind, oder durch eine flexible Leiterplatte gebildet werden. Die erfindungsgemäße Lösung läßt sich zudem auf unterschiedliche Leitertypen, also z.B. sowohl auf elektrische als auch auf optische Leiter anwenden.

Unter einem tragenden Element wird ein beliebiges Fahrzeugteil verstanden, insbesondere ein Element einer Kraftfahrzeugtür, an dem eine elektrische Leiteranordnung befestigbar ist.

Der Befestigungsabschnitt der Leiteranordnung und der zugeordnete Abschnitt des tragenden Elementes greifen aufgrund der plastischen Verformung formschlüssig ineinander, indem der eine Befestigungsabschnitt formschlüssig in einen Hinterschnitt des anderen Befestigungsabschnittes eingreift.

Die beiden Befestigungsabschnitte können vorteilhaft derart verformt sein und somit derart ineinandergreifen, daß keiner der beiden Befestigungsabschnitte eine Durchgangsöffnung bildet. Somit wird eine Verbindung geschaffen, die keine zusätzliche Dichtung erfordert und daher besonders vorteilhaft zur Befestigung einer elektrischen Leiteranordnung an einem tragenden Element verwendet werden kann, welches zur Trennung eines Trockenraums vom Naßraum des Fahrzeugs dient.

Bei einer bevorzugten Ausführungsform der Erfindung greift der Befestigungsabschnitt des tragenden Elementes in den Befestigungsabschnitt der Leiteranordnung ein. Dies ermöglicht eine zugbelastbare und zuverlässige mechanische Verbindung, deren Festigkeit im wesentlichen von der Verformbarkeit des Befestigungsabschnittes der Leiteranordnung abhängt. Beispielsweise ist eine Kupferleitbahn als Befestigungsabschnitt der Leiteranordnung für eine gewünschte Festigkeit entsprechend dick ausgebildet.

Um die Festigkeit weitestgehend unabhängig von der Beschaffenheit der Leiter der Leiteranordnung zu gewährleisten ist ein weiterer Aspekt der Erfindung die Verwendung eines Zusatzelementes, wobei mindestens ein Befestigungsabschnitt der Leiteranordnung, ein zugeordneter Befestigungsabschnitt des tragenden Elementes und ein Befestigungsabschnitt des Zusatzelementes derart plastisch verformt sind, daß die drei Befestigungsabschnitt ineinander greifen. Das Zusatzelement ist vorzugsweise ein Metallteil, daß im Idealfall zusammen mit dem Befestigungsabschnitt des tragenden Elementes einen Teil der Festigkeit gewährleistet.

In einer Ausgestaltung dieses Aspektes der Erfindung ist der Befestigungsabschnitt der Leiteranordnung eine Isolationsfolie, die zwischen dem Befestigungsabschnitt des tragenden Elementes und dem Befestigungsabschnitt der Leiteranordnung angeordnet ist. Dies hat den Vorteil, daß im Bereich der Befestigung kein deformierbares Material vorhanden sein muss, da die Festigkeit der Befestigung im wesentlichen durch die Anordnung zwischen den beiden Befestigungsabschnitten des tragenden Elementes und des Zusatzelementes erfolgt.

Der Befestigungsabschnitt der Leiteranordnung, der zugeordnete Abschnitt des tragenden Elementes und der des Zusatzelementes greifen aufgrund der plastischen Verformung vorzugsweise formschlüssig ineinander, z.B. indem der eine Befestigungsabschnitt des tragenden Elementes formschlüssig in einen Hinterschnitt des Befestigungsabschnittes der Leiteranordnung und dieser wiederum in einen Hinterschnitt des Befestigungsabschnittes des Zusatzelementes eingreift.

Das Zusatzelement wird in einer vorteilhaften Weiterbildung der Erfindung in Mehrfachfunktion als mechanisches Element einer Funktionseinheit genutzt. Beispielsweise ist das Zusatzelement neben der Funktion zur Kabelbefestigung zusätzlich als Befestigungshaken für ein Türelement vorzugsweise eine Türinnenverkleidung ausgebildet

Weitere Synergieeffekte werden erziehlt, wenn das Zusatzelement zusätzlich als Aufnahme zur Fixierung eines Bowdens, eines Gestänges oder eines Kabels oder als Halte- oder Befestigungselement für ein Gehäuse einer Funktionseinheit vorzugsweise für ein Elektronikgehäuse ausgebildet ist.

Gemäß einer Variante der Erfindung besteht zwischen der Leiteranordnung und dem tragenden Element eine Prägeverbindung, die beispielsweise durch Einwirken eines Stempels auf die zur Befestigung vorgesehenen Abschnitte der Leiteranordnung einerseits und des tragenden Elementes andererseits (Durchsetzfügen bzw. Clinchen) geschaffen werden kann. Als Widerlager kann dabei eine dem Stempel zugeordnete Matritze dienen. In einem weiteren Verfahrensschritt kann durch einen weiteren ausgeübten Druck auf die Prägeverbindung die erzeugten Hinterschnitte vergrößert und somit die Festigkeit gesteigert werden.

Gemäß einer anderen Variante der Erfindung kann die Leiteranordnung durch Stanznieten mit dem tragenden Element verbunden sein. Hierbei werden die Leiteranordnung einerseits und das tragende Element andererseits in ihren Befestigungsabschnitten durch den eindringenden Stanzniet derart verformt, daß eine Verbindung hergestellt ist. Der Stanzniet greift dabei in das Material der beiden Befestigungsabschnitte ein, ohne diese aber vollständig zu durchgreifen.

Der Stanzniet ist vorzugsweise derart aufspreizbar, daß er mit einem aufgespreizten Ende mindestens einen der beiden Befestigungsabschnitte hintergreift.

Der Befestigungsabschnitt der Leiteranordnung kann einerseits unmittelbar durch einen der Leiter (eine der Leiterbahnen) der Leiteranordnung gebildet werden oder andererseits durch ein von den Leiterbahnen verschiedenes Element der Leiteranordnung.

Bei unmittelbarer Befestigung einer elektrischen Leiterbahn an einem aus Metall bestehenden tragenden Element muß die Leiteranordnung zumindest an den Befestigungsstellen gegenüber dem tragenden Element isoliert werden - es sei denn, das tragende Element soll zur Erdung einer Leiterbahn dienen.

Die Isolierung kann beispielsweise durch eine Lackierung der Oberfläche des tragenden Elementes oder durch eine separate Dichtmasse gewährleistet werden. Andererseits kann auch ein die Leiterbahnen der Leiteranordnung umgebender Träger aus einem nicht leitenden Material, z.B. aus Kunststoff, als Isolierung dienen.

Um eine zusätzliche Isolierung der Leiteranordnung im Bereich der Befestigung zu vermeiden, wenn eine elektrische Leiterbahn an einem leitenden tragenden Element befestigt ist, wird in einer vorteilhaften Ausgestaltung der Erfindung ein Isolationsabschnitt der Leiteranordnung zur Befestigung verwendet. Dabei kann der Isolationsabschnitt selbst oder das Zusatzelement die gewünschte Festigkeit der Verbindung gewährleisten.

Gemäß einer anderen Ausführungsform der Erfindung umfaßt die Leiteranordnung eine speziell für deren Befestigung an dem tragenden Element vorgesehene Befestigungsbahn, die sich neben den Leiterbahnen der Leiteranordnung erstreckt und die den mindestens einen Befestigungsabschnitt der Leiteranordnung bildet, oder die Befestigung erfolgt über einen Träger der Leiteranordnung.

Die erfindungsgemäße Verbindung zwischen einer Leiterandordnung und einem tragenden Element lässt sich nicht nur auf Kraftfahrzeug-Baugruppen sondern allgemein auf Bauteilverbindungen zwischen einer Leiteranordnung und einem tragenden Element anwenden. Eine entsprechende Bauteilverbindung ist durch die Merkmale des Anspruchs 23 charakterisiert. Das tragende Element kann in diesem Fall durch ein beliebiges Element gebildet werden, an dem sich eine Leiteranordnung befestigen lässt und das insoweit die Leiteranordnung zumindest teilweise aufnimmt bzw. abstützt oder trägt.

Auch bei einer Anwendung der erfindungsgemäßen Bauteilverbindung außefialb von Kraftfahrzeugbaugruppen, z.B. zur Befestigung von Leiteranordnungen bei Haushaltsgeräten oder Maschinen, wobei das tragende Element beispielsweise durch ein Gehäuseteil gebildet werden kann, werden die eingangs genannten Vorteile der Erfindung erreicht und lassen sich die vorstehend beschriebenen vorteilhaften Weiterbildungen der Erfindung verwirklichen.

Weitere Merkmale und Vorteile der Erfindung werden bei der nachfolgenden Beschreibung von Ausführungsbeispielen anhand der Figuren deutlich werden.

Es zeigen:
- Fig. 1a-: eine Draufsicht auf eine Leiteranordnung, die an mehreren Befestigungsstellen mit einem tragenden Element eines Kraftfahrzeugs verbunden ist, wobei die Befestigungsabschnitte der Leiteranordnung durch eine separate Befesti-gungsbahn gebildet werden;
- Fig. 1b -: einen Querschnitt durch die Leiteranordnung aus Figur 1a;
- Fig. 1c -: einen Ausschnitt aus den Figuren 1a und 1b in perspektivischer Darstellung;
- Fig. 2 -: eine Abwandlung des Ausführungsbeispiels aus den Figuren 1a bis 1c, wobei die Befestigungsabschnitte der Leiteranordnung unmittelbar durch eine Leiterbahn gebildet werden;
- Fig. 3a - 3c -: drei unterschiedliche Möglichkeiten zur Isolierung von Leiterbahnen gegenüber einem tragenden Element des Kraftfahrzeugs;
- Fig. 4a -: eine Draufsicht auf eine Leiteranordnung, die an mehreren Befestigungsstellen mit einem tragenden Element eines Kraftfahrzeugs verbunden ist, wobei die Befestigungsabschnitte der Leiteranordnung durch einen Kunststoffträger der Leiteranordnung gebildet werden;
- Fig. 4b -: einen Querschnitt durch die Leiteranordnung aus Figur 4a;
- Fig. 4c -: einen Verfahrensschritt bei der Herstellung der Verbindung zwischen der Leiteranordnung und dem tragenden Element gemäß den Figuren 4b und 4c;
- Fig. 5a -: eine Draufsicht auf eine Leiteranordnung, die an mehreren Befestigungsstellen durch Stanzniete mit einem tragenden Element eines Kraftfahrzeugs verbunden ist, wobei die Stanzniete in zusätzliche Befestigungsbahnen der Leiteranord-nung eingreifen;
- Fig. 5b -: einen Ausschnitt aus Figur 5a in perspektivischer Darstellung;
- Fig. 6a -: eine Abwandlung der Darstellung aus Figur 5a, wobei die Stanzniete in einen Kunststoffträger der Leiteranordnung eingreifen;
- Fig. 6b -: einen Ausschnitt aus der Leiteranordnung gemäß Figur 6a;
- Fig. 7a-7c -: drei verschiedene Ausgestaltungen einer Befestigungsstelle, über die eine Leiteranordnung an einem tragenden Element eines Kraftfahrzeugs befestigt ist;
- Fig. 8a -: eine Draufsicht auf eine Leiteranordnung, an die eine Befestigungsbahn geknöpft ist, über die die Leiteranordnung mit einem tragenden Element eines Kraftfahr-zeugs verbunden werden kann;
- Fig. 8b -: eine erste Abwandlung des Ausführungsbeispiels gemäß Figur 8a;
- Fig. 8c -: eine zweite Abwandlung des Ausführungsbeispiels gemäß Figur 8a;
- Fig. 9a -: eine Schnittansicht einer Leiteranordnung, die an einer Befestigungsstelle mit einem tragenden Element eines Kraftfahrzeugs verbunden ist;
- Fig. 9b -: eine Schnittansicht einer Leiteranordnung, die an einer Befestigungsstelle durch einen Stanzniet mit einem tragenden Element eines Kraftfahrzeugs verbunden ist;
- Fig. 10a und Fig.10b: zwei Draufsichten auf eine Leiteranordnung, die an mehreren Befestigungsstellen mit einem tragenden Element eines Kraftfahrzeugs verbunden ist, wobei Befestigungsabschnitte von Zusatzelementen genutzt werden;
- Fig. 10c -: einen Ausschnitt aus der Figur 10b in perspektivischer Darstellung;
- Fig. 10d -: eine Abwandlung des Ausführungsbeispiels aus der Figur 10c, wobei die Befestigungsabschnitte des tragenden Elementes und des Zusatzelementes in der Anordnung vertauscht sind;
- Fig. 10e und Fig. 10f: Schnittansicht auf eine Leiteranordnung, die eine Befestigungsstelle mit einer Stanzniete und einem Zusatzelement aufweisen
- Fig. 11 -: einen Querschnitt durch eine Leiteranordnung gemäß Figur 1a, die durch Schweißen mit einem tragenden Element eines Kraftfahrzeugs verbunden ist

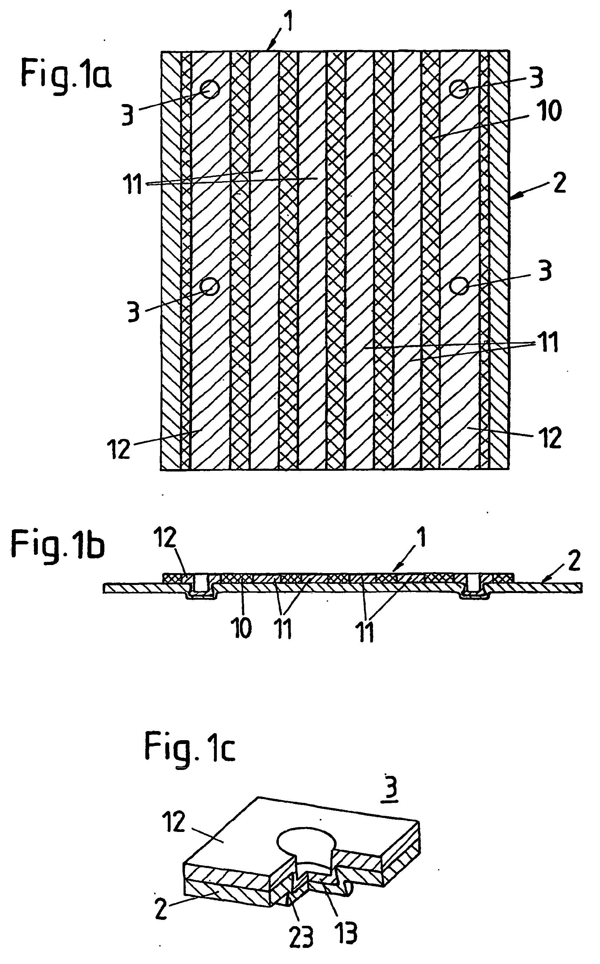

Figuren 1a und 1b zeigen in einer Draufsicht bzw. einem Querschnitt einen Ausschnitt einer Leiteranordnung 1, die auf einem aus Kunststoff oder Metall bestehenden tragenden Element 2 einer Kraftfahrzeugtür, z.B. einem Türmodulträger oder einem Türinnenblech, befestigt ist. Bei der Leiteranordnung 1 handelt es sich um einen Flachleiter, der aus einer Mehrzahl auf einem flexiblen Trägerkörper 10 angeordneter, parallel zueinander verlaufender Leiterbahnen 11 besteht. Der aus Kunststoff bestehende flexible Träger 10 umschließt dabei die Leiter 11 vollständig.

Am äußeren Rand des Flachleiters 1 verläuft beidseits parallel zu den Leiterbahnen 11 jeweils eine Befestigungsbahn 12, die ebenso wie die Leiterbahnen 11 aus Metall besteht, die jedoch im Gegensatz zu den Leiterbahnen 11 nicht zur elektrischen Leitung von Strom oder Signalen, sondern vielmehr ausschließlich zur Befestigung des Flachleiters 1 an dem tragenden Element 2 an einer Mehrzahl von Befestigungsstellen 3 dient.

Die Ausbildung der Befestigungsstellen 3 ist erkennbar anhand der Querschnittsdarstellung der Leiterbahnen 11 und des tragenden Elementes 2 in Figur 1b sowie der teilweise geschnittenen perspektivischen Darstellung einer Befestigungsstelle 3 in Figur 1c.

Gemäß den Figuren 1b und 1c werden die Befestigungsstellen 3 jeweils durch ineinandergreifende Materialabschnitte (Befestigungsabschnitte 13, 23) einer Befestigungsbahn 12 einerseits und des tragenden Elementes 2 andererseits gebildet Bei den Befestigungsabschnitten 13, 23 handelt es sich jeweils um im wesentlichen topfförmige Verformungen des Materials der Befestigungsbahn 12 einerseits und des Trägerelementes 2 andererseits. Dabei hintergreift der Befestigungsabschnitt 13 der Befestigungsbahn 12 einen Hinterschnitt des Befestigungsabschnittes 23 des tragenden Elementes 2.

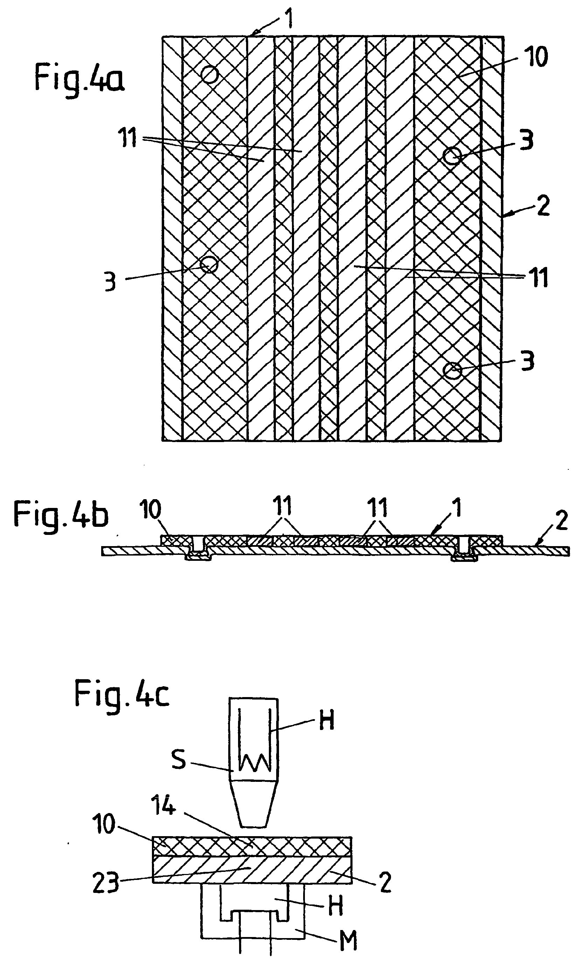

Die in den Figuren 1b und 1c dargestellten plastischen Verformungen der Befestigungsabschnitte 13, 23 können mittels Durchsetzfügen (Clinchen) unter Verwendung eines Stempels erzeugt werden, der im vorliegenden Ausführungsbeispiel auf die Befestigungsbahn 12 und über diese auf das tragende Element 2 einwirkt. Dem Stempel ist eine Matritze zugeordnet, die unterhalb des tragenden Elementes angeordnet ist und als Widerlager für den Stempel dient, siehe auch Figur 4c. Durch das Zusammenwirken des Stempels mit der Matritze beim Prägevorgang wird erreicht, daß die Befestigungsabschnitte 13, 23 formschlüssig ineinandergreifen, wie in den Figuren 1b und 1 erkennbar. Die Befestigungsabschnitte 13, 23 bilden demnach eine formschlüssige Prägeverbindung, hergestellt mittels Durchsetzfügen bzw. Clinchen.

Wenn das tragende Element 2 aus Kunststoff besteht, dann kann dieses während des Durchsetzfügens/Clinchens erwärmt werden.

Anhand der Figuren 1b und 1c ist femer erkennbar, daß keiner der beiden Befestigungsabschnitte 13, 23 eine Durchgangsöffnung bildet, so daß die jeweilige Befestigungsstelle 3 keiner zusätzlichen Abdichtung bedarf. Die Befestigungsstellen 3 beeinträchtigen somit in keiner Weise eine Funktion des tragenden Elementes 1 als Naß-/Trockenraumtrennung einer Kraftfahrzeugtür.

Um eine gewünschte Stabilität bzw. Belastbarkeit der Verbindung sicherzustellen, kann die Befestigungsbahn 12 aus einem anderen Material bestehen oder eine größere Dicke aufweisen als die Leiterbahnen 11 des Flachleiters 1.

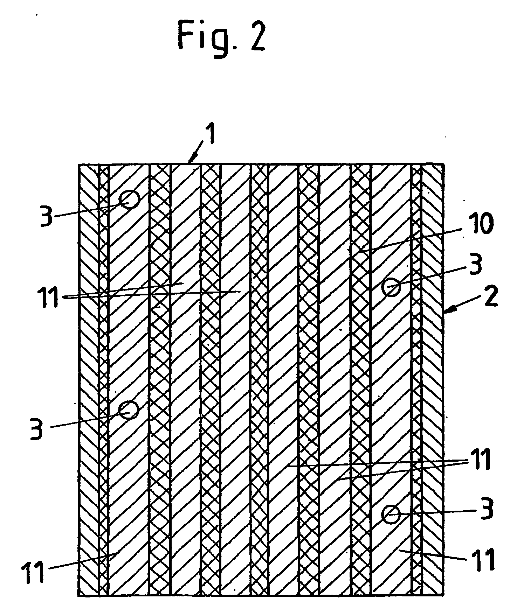

Figur 2 zeigt eine Abwandlung des Ausführungsbeispiels aus den Figuren 1a bis 1c, wobei der Unterschied darin besteht, daß die Befestigungsstellen 3 nicht an separaten Befestigungsbahnen sondern unmittelbar an Leiterbahnen 11 des Flachleiters 1 vorgesehen sind.

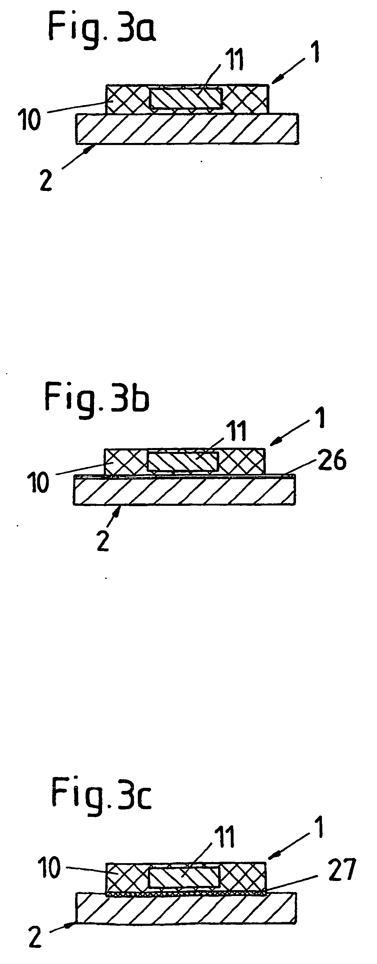

Bei Verwendung eines tragenden Elementes 2 aus Metall besteht das Problem, daß bei Schaffung der Prägeverbindung an den Befestigungsstellen 3 mittels Durchsetzfügen/Clinchen ein unmittelbarer Kontakt zwischen der jeweiligen Leiterbahn 11 einerseits und dem aus Metall bestehenden tragenden Element 2 andererseits im Bereich der Befestigungsabschnitte 13, 23 auftreten kann. Dieser Kontakt kann in solchen Fällen erwünscht sein, in denen eine Leiterbahn 11 über ihre Befestigungsstellen 13 mit Masse (tragendes Element 2) kontaktiert werden sollen. In anderen Fällen wird jedoch eine hinreichende Isolierung auch der zur Befestigung dienenden äußeren Leiterbahnen 11 gegenüber dem tragenden Element 2 gewünscht sein. In diesem Fall muß die jeweilige Leiterbahn 11 derart gegenüber dem tragenden Element 2 isoliert werden, daß ein elektrischer Kontakt auch im Bereich der Befestigungsstellen 3 ausgeschlossen ist. Beispiele hierfür sind in den Figuren 3a bis 3c dargestellt.

Gemäß Figur 3a ist die als Träger des Flachleiters 1 dienende Kunststoffeinfassung 10 so gestaltet, daß sie auch nach einer Verformung mittels Durchsetzfügen/Clinchen nach wie vor eine isolierende Lage zwischen der entsprechenden Leiterbahn 11 und dem tragenden Element 2 bildet. Hierzu ist die Kunststoffeinfassung hinreichend stabil auszubilden; es ist also ein hinreichend reißfestes Material zu verwenden und/oder die Kunststoffeinfassung in entsprechender Dicke auszuführen.

Bei dem in Figur 3b dargestellten Ausführungsbeispiel ist auf der der Leiterbahn 11 zugewandten Oberfläche des tragenden Elementes 2 eine Beschichtung, beispielsweise in Form einer Lackierung, vorgesehen, die eine isolierende Zwischenschicht zwischen den Leiterbahnen 11 und dem tragenden Element 2 bildet.

Gemäß Figur 3c kann auch eine separate Dichtmasse 27 zwischen den Leiterbahnen 1 und dem Trägerelement 2 angeordnet sein.

Die Figuren 4a und 4b zeigen eine weitere Abwandlung des Ausführungsbeispiels aus den Figuren 1a und 1b, wobei hier zur Bildung der Befestigungsstellen 3, über die der Flachleiter 1 an dem tragenden Element 2 befestigt ist, ein Abschnitt 14 des Trägers 10 des Flachleiters 1 gemeinsam mit einem zugeordneten Abschnitt 23 des tragenden Elementes 2 verformt wird. Es greifen hier also nach Art einer Prägeverbindung ein Befestigungsabschnitt 14 des Trägers 10 der Leiterbahn 11 und ein zugeordneter Befestigungsabschnitt 23 des tragenden Elementes 1 formschlüssig ineinander.

Ein Beispiel zur Herstellung einer derartigen Prägeverbindung mittels Durchsetzfügen/Clinchen ist in Figur 4c dargestellt und umfaßt einen Stempel S mit Heizdraht H sowie eine zugeordnete Matrize M mit Heizeinrichtung H. Durch Einwirkung des Stempels S auf den Befestigungsabschnitt 14 des aus Kunststoff bestehenden Trägers 10 und den Befestigungsabschnitt 23 des tragenden Elementes 2, wobei die Matritze M als Widerlager wirkt, läßt sich die gewünschte plastische Verformung der Befestigungsabschnitte 14, 23 unter Schaffung einer formschlüssigen Prägeverbindung erreichen. Der Stempel S und die Matritze M können dabei wahlweise so angeordnet werden, daß der Stempel S entweder unmittelbar an dem Befestigungsabschnitt 14 des Trägers 10 oder umgekehrt unmittelbar auf dem Befestigungsabschnitt 23 des tragenden Elementes 2 einwirkt. Letzteres entspräche einer Drehung der in Figur 4c dargestellten Anordnung aus Stempel S und Matrize M um 180°.

Mittels der Heizeinrichtungen H können der Stempel S und/ oder die Matritze M vor dem Einwirken auf die Befestigungsabschnitte 14, 23 erwärmt werden. Dies ist insbesondere bei der Einwirkung auf aus Kunststoff bestehende Befestigungsabschnitte vorteilhaft.

Die vorstehend erläuterten Ausführungsbeispiele der Erfindung zeichnen sich jeweils dadurch aus, daß zur Befestigung einer Leiteranordnung 1 an einem tragenden Element 2 jeweils unmittelbar Abschnitte der Leiteranordnung 1 einerseits und des tragenden Elementes 2 andererseits derart plastisch verformt werden, daß sie formschlüssig ineinandergreifen (Prägeverbindung). Zusätzliche Befestigungselemente sind in diesem Fall nicht erforderlich.

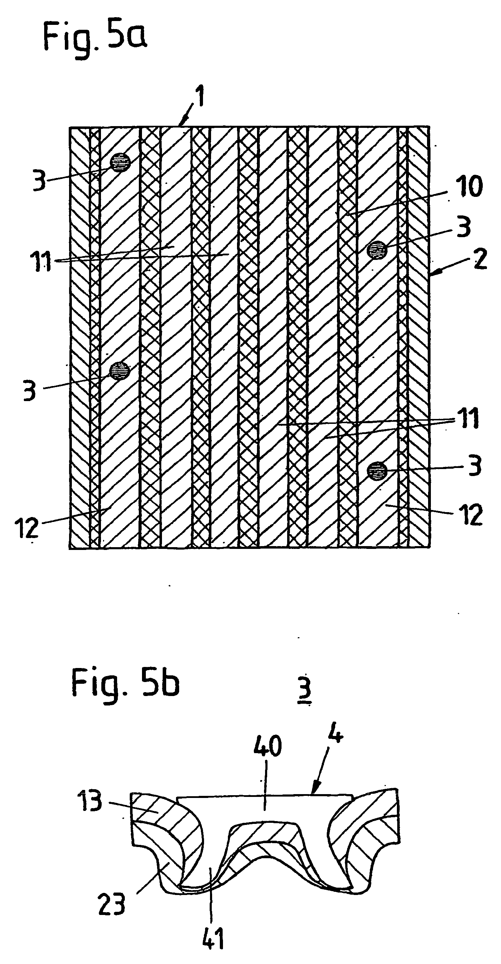

Bei dem in den Figuren 5a und 5b dargestellten Ausführungsbeispielen ist an den Befestigungsstellen 3 jeweils ein Stanzniet 4 als zusätzliches Befestigungsmittel vorgesehen. Dieser ist jeweils so in Befestigungsabschnitte 13 einer zusätzlichen Befestigungsbahn 12 des Flachleiters 1 sowie in einen zugeordneten Befestigungsabschnitt 23 des tragenden Elementes 2 eingebracht, daß dessen unterer Abschnitt 41 (der dem Kopf 40 des Stanznietes 4 abgewandt ist) derart aufgespreizt ist, daß er formschlüssig in die Befestigungsabschnitte 13, 23 eingreift.

Auch bei diesem Ausführungsbeispiel liegen im Bereich der Befestigungsstellen 3 keine Durchgangsöffnungen vor, so daß auch diese Verbindung keine Probleme hinsichtlich der Verwendung des tragenden Elementes 2 als Naß-/Trockenraumtrennung bietet.

Alternativ kann zur Bildung eines Befestigungsabschnittes 13 auch unmittelbar eine der Leiterbahnen 11 dienen, welche in erster Linie die Funktion der Signal- oder Stromleitung hat. Zur Isolierung können hier entsprechende Maßnahmen getroffen werden, wie anhand der Figuren 3a bis 3c dargestellt.

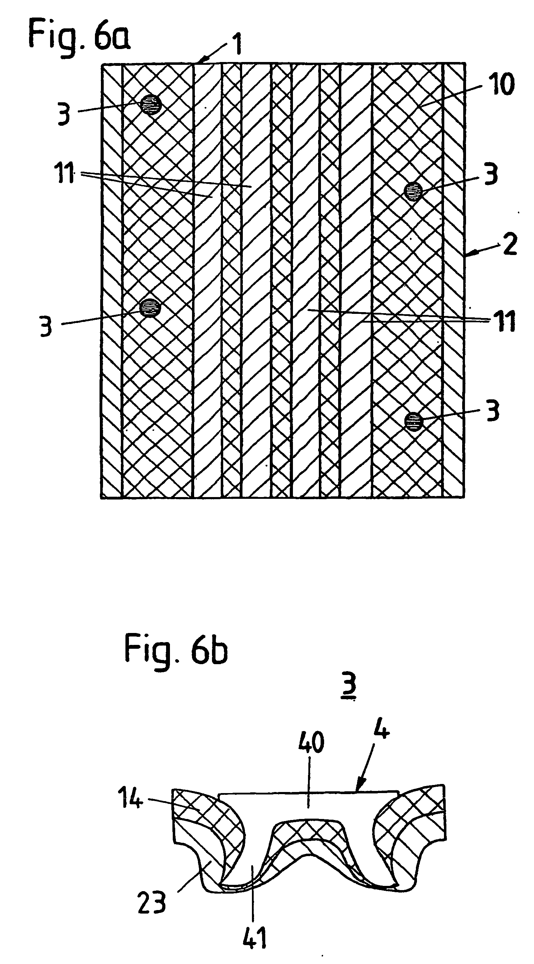

Das in den Figuren 6a und 6b dargestellte Ausführungsbeispiel stellt eine Abwandlung des Ausführungsbeispiels aus den Figuren 5a und 5b dar, und zwar dahingehend, daß die Stanzniete 4 an den Befestigungsstellen 3 jeweils in einen Befestigungsabschnitt 14 des Kunststoffträgers 10 des Flachleiters 1 und in einen zugeordneten Befestigungsabschnitt 23 des tragenden Elementes 2 eingreifen.

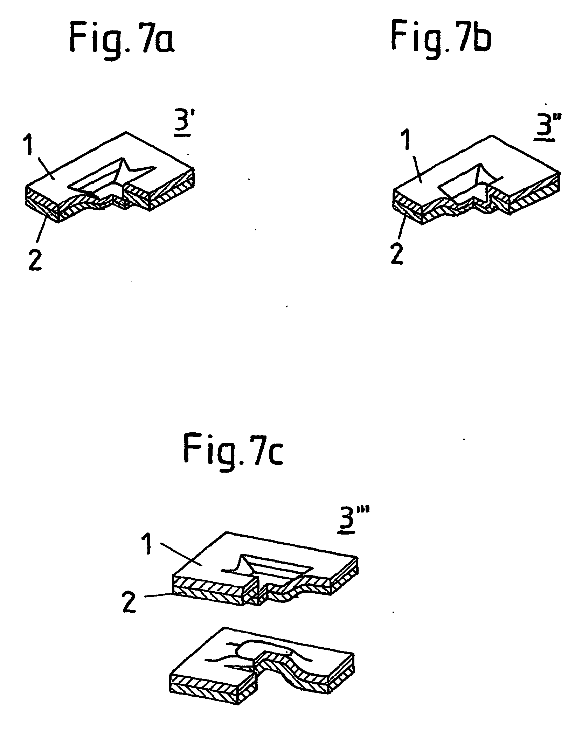

Die Figuren 7a bis 7c zeigen in perspektivischer Darstellung drei weitere mögliche Ausgestaltungen einer Befestigungsstelle 3', 3", 3"', über die eine Leiteranordnung 1 in der zuvor beschriebenen Weise mit einem tragenden Element 2 verbindbar ist. In Figur 7c ist die Befestigungsstelle 3"' dabei sowohl in einer perspektivischen Draufsicht als auch in einer perspektivischen Unteransicht gezeigt.

Wie anhand der Figuren 7a bis 7c erkennbar ist, muß die topfförmige Befestigungsstelle keineswegs im wesentlichen kreisförmig ausgebildet sein, wie es bei den zuvor dargestellten Ausführungsbeispielen der Fall ist. Die in den Figuren 7a bis 7c dargestellten Befestigungsstellen 3', 3", 3"' weisen jeweils eine im wesentlichen rechteckförmige Grundfläche auf, wobei zusätzlich Vorsprünge oder Vertiefungen in den Wänden der jeweiligen Befestigungsstelle vorgesehen sein können. Die Form der jeweiligen Befestigungsstelle wird maßgeblich bestimmt durch die Querschnittsfläche des zur Schaffung der Befestigungsstelle verwendeten Stempels S, vergl. Figur 4c. Die Erfindung ist grundsätzlich mit beliebig gestalteten Stempeln ausführbar, sofern eine hinreichende Verformung der aneinander zu befestigenden Teile erreicht wird, so daß diese ineinandergreifen.

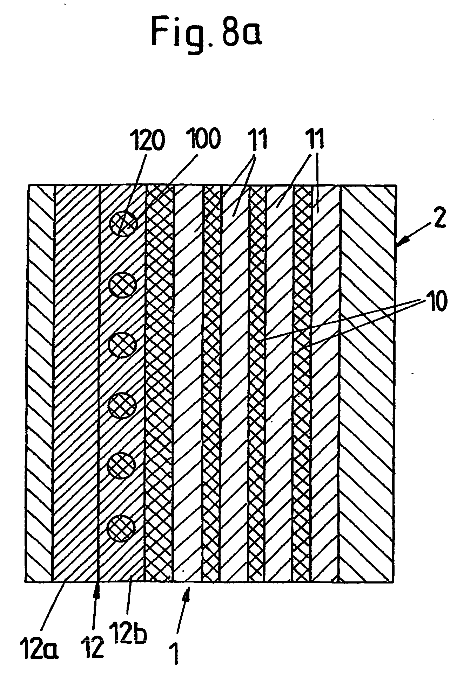

Figur 8a zeigt in einer Draufsicht eine Leiteranordnung in Form eines Flachleiters 1, der eine Mehrzahl auf einem Kunststoffträger 10 angeordneter, parallel verlaufender Leiterbahnen 11 aufweist. Ferner ist eine Befestigungsbahn 12 vorgesehen, die der Befestigung des Flachleiters 1 an einem tragenden Element 2 des Kraftfahrzeugs dient. Diese Befestigungsbahn 12 weist einen ersten Bahnabschnitt 12a auf, über den die Befestigungsbahn 12 mittels geeigneter Befestigungsstellen (wie oben anhand der Figuren 1a bis 7c gezeigt) an dem tragenden Element 2 des Kraftfahrzeugs befestigbar ist. Diese Befestigungsstellen sind in Figur 8a nicht dargestellt; es handelt sich also um eine Darstellung von Flachleiter 1 und tragendem Element 2 vor deren abschließenden Verbindung durch Schaffung hierfür vorgesehener Befestigungsstellen mittels eines geeigneten Stempels.

Ein zweiter Bahnabschnitt 12b der Befestigungsbahn 12, der sich neben dem ersten Bahnabschnitt 12a und parallel zu diesem erstreckt, dient der Verbindung der Befestigungsbahn 12 mit der Flachleiter 1, und zwar mit dessen Kunststoffträger 10. Hierzu weist die Befestigungsbahn 12 in ihrem zweiten Bahnabschnitt 12b eine Mehrzahl kreisrunder Löcher 120 auf, die auf entsprechende Vorsprünge 100 des Kunststoffträgers 10 geknöpft sind. Hierdurch entsteht eine formschlüssige Verbindung zwischen der Befestigungsbahn 12 und dem Kunststoffträger 10 des Flachleiters 1.

Der Kunststoffträger 10 erstreckt sich dabei vorzugsweise lediglich hinter dem zweiten Bahnabschnitt 12b der Befestigungsbahn 12, der der Verwendung der Befestigungsbahn 12 mit dem Kunststoffträger 10 dient. Der erste Bahnabschnitt 12a der Befestigungsbahn 12 liegt dann unmittelbar auf dem tragenden Element 2 auf, so daß nach Schaffung der erfindungsgemäß ausgestatteten Befestigungsstellen der erste Bahnabschnitt 12a der Befestigungsbahn 12 an diesen Stellen jeweils unmittelbar in einen entsprechend verformten Abschnitt des tragenden Elementes 2 eingreift.

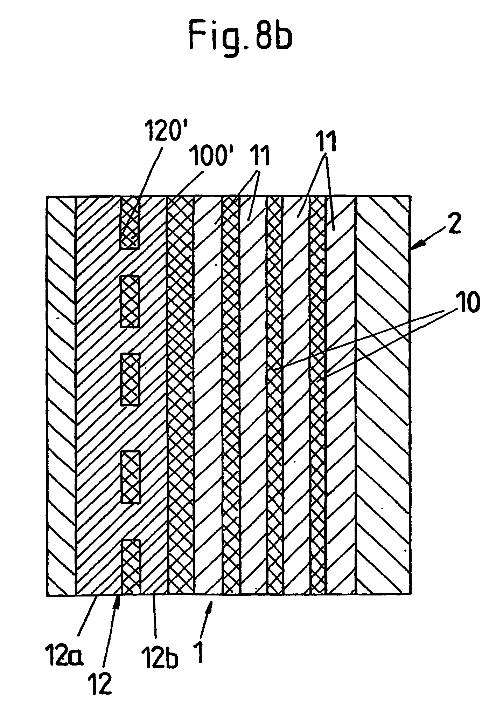

Figur 8b zeigt eine Abwandlung des Ausführungsbeispiels gemäß Figur 8a, bei dem die Befestigungsbahn 12 in ihrem zweiten Bahnabschnitt 12b eine Mehrzahl rechteckförmiger Öffnungen 120' aufweist, die auf entsprechend gestaltete Vorsprünge 100' des Kunststoffträgers 10 geknöpft sind, so daß eine formschlüssige Verbindung vorliegt

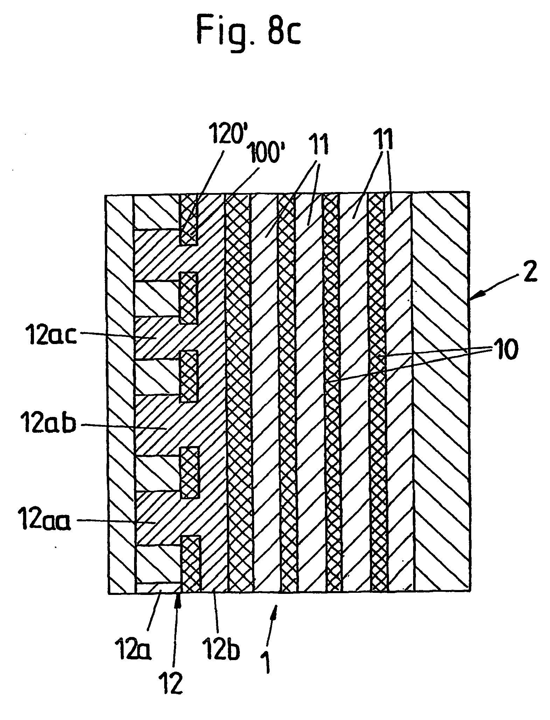

Bei dem Ausführungsbeispiel gemäß Figur 8c ist der erste Bahnabschnitt 12a der Befestigungsbahn 12 in Längsrichtung nicht durchgängig ausgebildet sondern besteht aus einer Mehrzahl in Längsrichtung hintereinander angeordneter Teilabschnitte 12aa, 12ab, 12ac,... Anhand Figur 8c ist insbesondere deutlich erkennbar, daß im Bereich des ersten Bahnabschnittes 12a die Befestigungsbahn 12 unmittelbar auf dem tragenden Element 2 aufliegt. Denn der Kunststoffträger 10 erstreckt sich lediglich unter dem zweiten Bahnabschnitt 12b der Befestigungsbahn 12 nicht aber unterhalb des daneben angeordneten ersten Bahnabschnittes 12a.

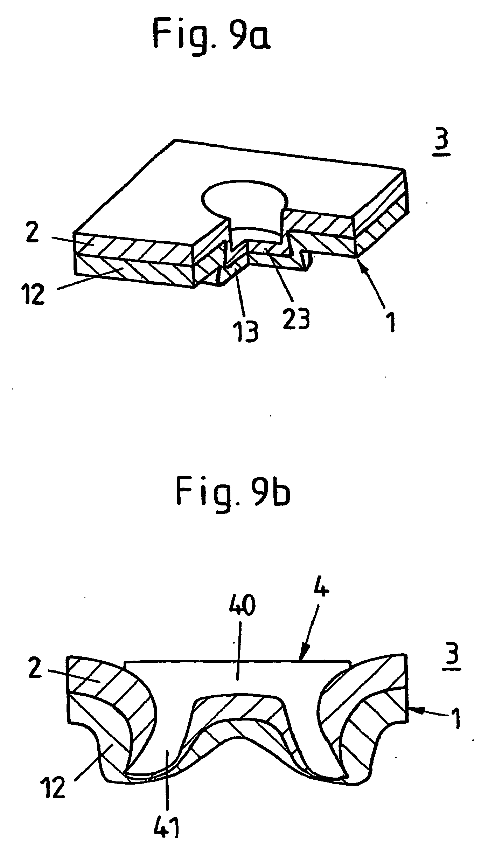

Die Figur 9a zeigt in einer Schnittansicht einen Ausschnitt einer Leiteranordnung 1, die auf einem aus Kunststoff oder. Metall bestehenden tragenden Element 2 einer Kraftfahrzeugtür, z.B. einem Türmodulträger oder einem Türinnenblech, befestigt ist. Die Ausbildung einer Befestigungsstelle 3 ist erkennbar anhand der teilweise geschnittenen perspektivischen Darstellung einer Befestigungsstelle 3 in Figur 9a.

Gemäß Figur 9a wird die Befestigungsstellen 3 jeweils durch ineinander greifende Materialabschnitte (Befestigungsabschnitte 13, 23) einer Befestigungsbahn 12 einerseits und des tragenden Elementes 2 andererseits gebildet. Bei den Befestigungsabschnitten 13, 23 handelt es sich jeweils um im wesentlichen topfförmige Verformungen des Materials der Befestigungsbahn 12 einerseits und des Trägerelementes 2 andererseits. Dabei hintergreift der Befestigungsabschnitt 23 des tragenden Elementes 2 einen Hinterschnitt des Befestigungsabschnittes 13 der Befestigungsbahn 12.

Die in Figur 9a dargestellten plastischen Verformungen der Befestigungsabschnitte 13, 23 können mittels Durchsetzfügen (Clinchen) unter Verwendung eines Stempels erzeugt werden, der im vorliegenden Ausführungsbeispiel auf das tragende Element 2 und über dieses auf die Befestigungsbahn 12 einwirkt. Dem Stempel ist eine Matrize zugeordnet, die unterhalb des tragenden Elementes angeordnet ist und als Widerlager für den Stempel dient. Durch das Zusammenwirken des Stempels mit der Matrize beim Prägevorgang wird erreicht, dass die Befestigungsabschnitte 13, 23 formschlüssig ineinander greifen. Die Befestigungsabschnitte 13, 23 bilden demnach eine formschlüssige Prägeverbindung, hergestellt mittels Durchsetzfügen bzw. Clinchen. Zur Verbesserung der Festigkeit dieser Verbindung kann zusätzlich in einem nachfolgenden Verfahrensschritt die Befestigungsabschnitte 13, 23 weiter verformt werden, so dass der Hinterschnitt vergrößert wird.

Bei dem in der Figur 9b dargestellten Ausführungsbeispiel ist an der Befestigungsstelle 3 ein Stanzniet 4 als zusätzliches Befestigungsmittel vorgesehen. Dieser ist jeweils so in einen Befestigungsabschnitt 23 des tragenden Elementes 2 sowie in einen zugeordneten Befestigungsabschnitt 13 einer zusätzlichen Befestigungsbahn 12 des Flachleiters 1 eingebracht, dass dessen unterer Abschnitt 41 (der dem Kopf 40 des Stanznietes 4 abgewandt ist) derart aufgespreizt ist, dass er formschlüssig in die Befestigungsabschnitte 13, 23 eingreift.

Auch bei diesem Ausführungsbeispiel liegen im Bereich der Befestigungsstellen 3 keine Durchgangsöffnungen vor, so dass auch diese Verbindung keine Probleme hinsichtlich der Verwendung des tragenden Elementes 2 als Nass-/Trockenraumtrennung bietet

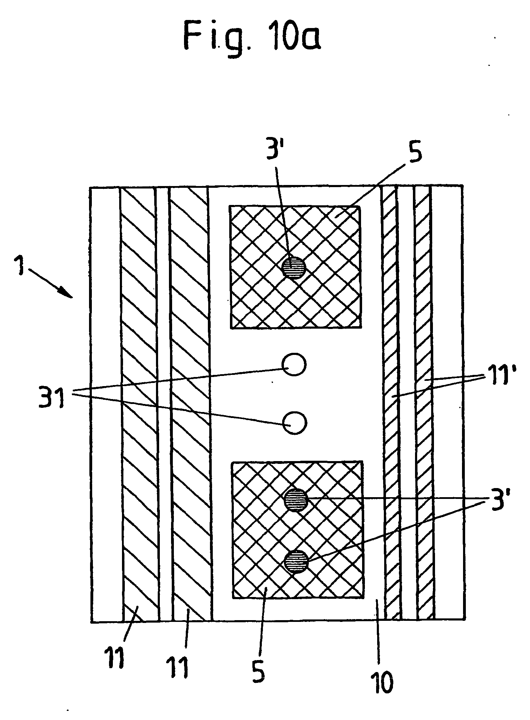

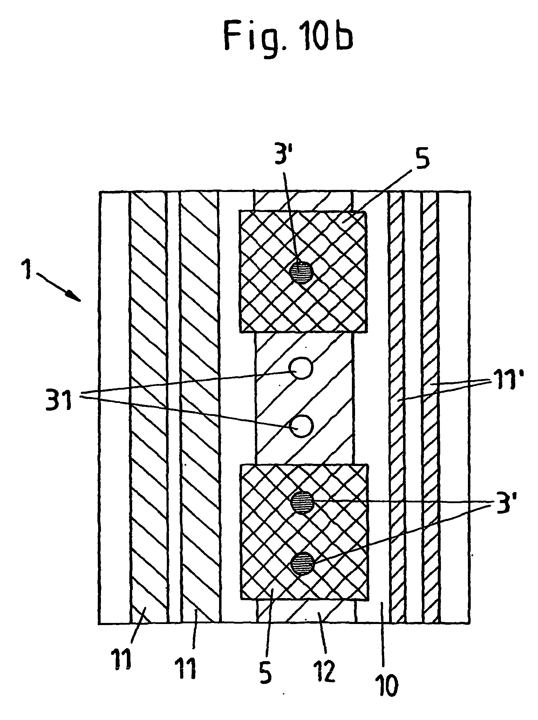

Bei der in den Figuren 10a und 10b dargestellten Leiteranordnungen 1 handelt es sich um Flachleiter, die beispielsweise aus einer Mehrzahl auf einem flexiblen Trägerkörper 10 angeordneter, parallel zueinander verlaufender Hochstrom-Leiterbahnen 11 oder Signal-Leiterbahnen 11' bestehen. Der aus Kunststoff bestehende flexible Träger 10 umschließt dabei die Leiter 11, 11' vollständig. Neben den Befestigungsstellen 3' für die Befestigung der jeweiligen Leiteranordnung 1 am tragenden Element 2 sind Öffnungen 31 zur Befestigung vorgesehen, die insbesondere eine Vorfixierung und Justage der Leiteranordnung 1 zu dem tragenden Element 2 ermöglichen.

Die in den Figuren 10a und 10b dargestellte Ausgestaltung der Erfindung zeigt an den Befestigungsstellen ein zusätzliches Befestigungsblech 5, das für die Fügung bevorzugte Materialeigenschaften aufweist. In der Figur 10a ist die Befestigungstelle 3' aus dem tragenden Element 2, dem flexiblen Träger 10 der Leiteranordnung 1 und dem Zusatzblech 5 gebildet. Dahingegen wird bei dem Ausführungsbeispiel der Figur 10b eine Befestigungsbahn 12 anstelle des flexiblen Trägers für die Bildung einer Befestigungsstelle genutzt. In der Mitte des Flachleiters 1 verläuft, wie in Figur 2b dargestellt, beidseits parallel zu den Leiterbahnen 11 eine Befestigungsbahn 12, die ebenso wie die Leiterbahnen 11 aus Metall besteht, die jedoch im Gegensatz zu den Leiterbahnen 11 nicht zur elektrischen Leitung von Strom oder Signalen, sondern vielmehr ausschließlich zur Befestigung des Flachleiters 1 an dem tragenden Element 2 an einer Mehrzahl von Befestigungsstellen 3' dient.

Das Zusatzelement 5, das aus Kunststoff, Metall oder einem anderen fügbaren Material besteht, weist neben der Funktion der Befestigung der Leiteranordnung 1 auf dem tragenden Element 2 vorteilhafterweise eine weitere, in den Figuren nicht dargestellte Funktion auf, beispielsweise als Halter zu Vorbefestigung oder Positionierung einer Funktionseinheit oder als Lager für eine Getriebeeinheit.

Aufgrund des in der Figur 10a verwendeten Zusatzblechs 5 ist eine Befestigungsbahn 12, wie gemäß Figur 10b vorgesehen, nicht erforderlich, da aufgrund der Paarung von Zusatzblech 5 und tragendem Element 2 eine notwendige Festigkeit der Verbindung gewährleistet werden kann. Der flexible Träger 10 ist in diesem Ausführungsbeispiel zwischen dem Zusatzblech 5 und dem tragenden Element 2 eingepresst.

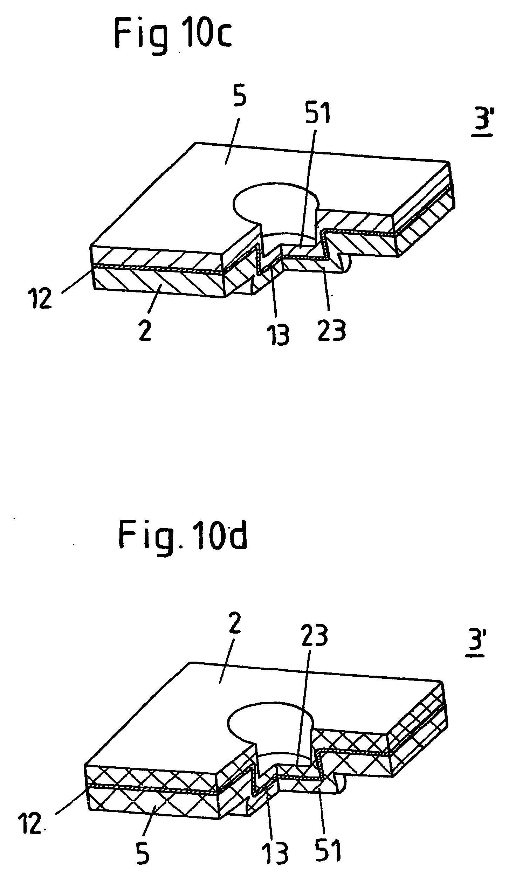

Die Figuren 10c und 10d zeigen jeweils einen Ausschnitt aus Figur 10b. Die Befestigungsstellen 3' werden jeweils durch ineinander greifende Materialabschnitte 13, 23, 51 einer Befestigungsbahn 12, des tragenden Elementes 2 und des Zusatzblechs 5 gebildet. Bei den Befestigungsabschnitten 12, 23, 51 handelt es sich jeweils um im wesentlichen topfförmige Verformungen des Materials der Befestigungsbahn 12, des tragenden Elementes 2 und des Zusatzblechs 5. Gemäß Figur 10c hintergreift der Befestigungsabschnitt 51 des Zusatzelementes 5 einen Hinterschnitt der Befestigungsbahn 12, der wiederum einen Hinterschnitt des tragenden Elementes 2 hintergreift.

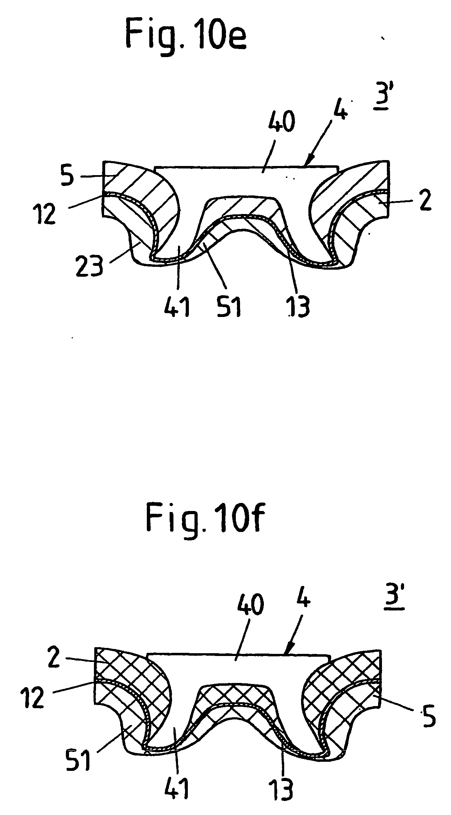

Die Figuren 10e und 10f zeigen in Analogie zur Figur 9b die Verwendung eines Stanznietes 4 zur Herstellung der Bauteilverbindung. Die Belastbarkeit der Befestigung wird wiederum durch die Nutzung eines Zusatzblechs 5 gesteigert. Die Figuren 2e und 2f zeigen dabei Befestigungsstellen 3' mit unterschiedlichen Fügerichtungen, nämlich einmal von Seiten des auf der Leiteranordnung (auf der Befestigungsbahn 12) angeordneten Zusatzelementes 5 (Fig. 10e) und einmal von Seiten des tragenden Elementes 2 (Fig. 10f).

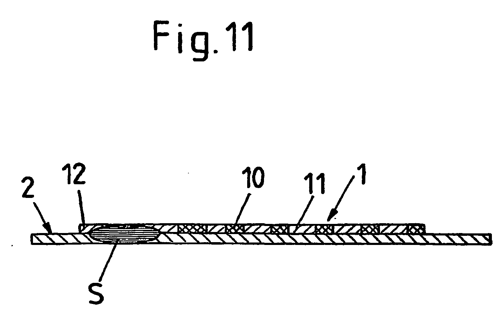

Figur 11 zeigt einen Querschnitt durch eine Leiteranordnung in Form eines Flachleiters 1 mit einer Mehrzahl Leiterbahnen 11 und einer Befestigungsbahn 12, die mittels eines Schweißpunktes S an einem tragenden Element 2 eines Kraftfahrzeugs befestigt ist. Der Kunststoffträger 10 des Flachleiters 1 ist dabei so ausgebildet, daß er sich nicht unterhalb der Befestigungsbahn 12 erstreckt, so daß die Befestigungsbahn 12 unmittelbar mit dem tragenden Element 2 verschweißt werden kann. Als Schweißtechniken zur Herstellung des Schweißpunktes S kommen insbesondere Ultraschallschweißen und Laserstrahlschweißen in Betracht.

Die erfindungsgemäße Lösung wurde vorstehend beispielhaft in mehreren Ausführungsbeispielen anhand einer Leiteranordnung 1 beschrieben, bei der es sich um einen so genannten Flach- bzw. Folienleiter handelt, der eine Mehrzahl auf einem Kunststoffträger bzw. in einer Kunststoffummantelung angeordneter flacher Leiterbahnen umfasst. Die erfindungsgemäße Lösung lässt sich aber auch auf andere Leiteranordnungen, wie z.B. auf flexible Leiterplatten (FPC), die mit Leiterbahnen bedruckt sind, laminierte Folienleiter (FLC) oder extrudierte Flachleiter (ExFC), anwenden.

Die vorstehend jeweils am Beispiel einer Anwendung in Kraftfahrzeugen beschriebenen Anordnungen können in gleicher Weise bei beliebigen anderen Einrichtungen Anwendung finden, z.B. bei Haushaltsgeräten, elektrischen Maschinen, Werkzeugen oder sonstigen Geräten. Denn die erfindungsgemäße Ausbildung der Bauteilverbindung ist unabhängig davon, für welche Einrichtung das die Leiteranordnung tragende Element jeweils vorgesehen ist

## Patentansprüche

1. Kraftfahrzeug-Baugruppe, insbesondere Baugruppe für eine Kraftfahrzeugtür, mit
- einem tragenden Element (2) und
- einer an dem tragenden Element (2) befestigten Leiteranordnung (1), die zur Bestromung elektrischer Komponenten eines Fahrzeugs oder zur Signalübermittlung dient,
**dadurch gekennzeichnet,**
**daß** mindestens ein Befestigungsabschnitt (13, 14) der Leiteranordnung (1) und ein zugeordneter Befestigungsabschnitt (23) des tragenden Elementes (2) derart plastisch verformt sind, daß der eine Befestigungsabschnitt (13, 14) in einen Hinterschnitt des anderen Befestigungsabschnittes (23) eingreift.

2. Kraftfahrzeug-Baugruppe nach Anspruch 1, **dadurch gekennzeichnet, daß** die Befestigungsabschnitte (13, 23; 14, 23) ineinander greifen, ohne eine Durchgangsöffnung zu bilden.

3. Kraftfahrzeug-Baugruppe nach Anspruch 1 oder 2, **dadurch gekennzeichnet, daß** mindestens ein Befestigungsabschnitt (13) der Leiteranordnung (1) und ein zugeordneter Befestigungsabschnitt (23) des tragenden Elementes (2) plastisch derart verformt sind, dass der Befestigungsabschnitt (23) des tragenden Elementes (2) in den Befestigungsabschnitt (13) der Leiteranordnung (1) eingreift, so dass der Befestigungsabschnitt (13) der Leiteranordnung (1) den Befestigungsabschnitt (23) des tragenden Elementes (2) zumindest teilweise umgreift

4. Kraftfahrzeug-Baugruppe nach einem der vorhergehenden Ansprüche, **dadurch gekennzeichnet, daß** mindestens ein Befestigungsabschnitt (13) der Leiteranordnung (1), ein zugeordneter Befestigungsabschnitt (23) des tragenden Elementes (2) und ein Befestigungsabschnitt (51) eines Zusatzelementes (5) derart plastisch verformt sind, dass die drei Befestigungsabschnitte (13,23,51) ineinander greifen.

5. Kraftfahrzeug-Baugruppe nach Anspruch 4, **dadurch gekennzeichnet, daß** das Zusatzelement in Mehrfachfunktion als mechanisches Element einer Funktionseinheit dient.

6. Kraftfahrzeug-Baugruppe nach Anspruch 5, **dadurch gekennzeichnet, daß** das Zusatzelement (5) zusätzlich als Befestigungshaken für ein Türelement, insbesondere eine Türinnenverkleidung ausgebildet ist.

7. Kraftfahrzeug-Baugruppe nach Anspruch 5, **dadurch gekennzeichnet, daß** das Zusatzelement (5) zusätzlich als Aufnahme zur Fixierung eines Bowdens, eines Gestänges oder eines Kabels ausgebildet ist.

8. Kraftfahrzeug-Baugruppe nach Anspruch 5, **dadurch gekennzeichnet, daß** das Zusatzelement (5) zusätzlich als Halte- oder Befestigungselement für ein Gehäuse einer Funktionseinheit, insbesondere für ein Elektronikgehäuse, ausgebildet ist

9. Kraftfahrzeug-Baugruppe nach einem der vorhergehenden Ansprüche, **dadurch gekennzeichnet, daß** die Leiteranordnung (1) an dem tragenden Element (2) an einer Mehrzahl Befestigungsstellen (3) befestigt ist

10. Kraftfährzeug-Baugruppe nach einem der vorhergehenden Ansprüche, **dadurch gekennzeichnet, daß** die Leiteranordnung (1) an mindestens einer Befestigungsstelle (3) mittels Durchsetzfugen mit dem tragenden Element (2) verbunden ist

11. Kraftfahrzeug-Baugruppe nach einem der Ansprüche 1 bis 9, **dadurch gekennzeichnet, daß** die Leiteranordnung (1) an mindestens einer Befestigungsstelle (3) mittels eines Stanznietes (4) mit dem tragenden Element (2) verbunden ist.

12. Kraftfahrzeug-Baugruppe nach Anspruch 11, **dadurch gekennzeichnet, daß** der Stanzniet (4) an der Befestigungsstelle (3) in die beiden Befestigungsabschnitte (13, 23; 14, 23) eingreift, ohne einen der Befestigungsabschnitte vollständig zu durchgreifen.

13. Kraftfahrzeug-Baugruppe nach Anspruch 11 oder 12, **dadurch gekennzeichnet, daß** der Stanzniet (4) derart aufgespreizt ist, daß er mindestens einen der Befestigungsab-schnitte (13, 23; 14, 23) hintergreift.

14. Kraftfahrzeug-Baugruppe nach einem der vorhergehenden Ansprüche, **dadurch gekennzeichnet, daß** die Leiteranordnung (1) mehrere nebeneinander angeordnete, längserstreckte Leiterbahnen (11) umfaßt.

15. Kraftfahrzeug-Baugruppe nach einem der vorhergehenden Ansprüche, **dadurch gekennzeichnet, daß** die Leiteranordnung (1) durch einen Flachleiter gebildet wird.

16. Kraftfahrzeug-Baugruppe nach einem der Ansprüche 1 bis 14, **dadurch gekennzeichnet, daß** die Leiteranordnung (1) durch eine flexible Leiterplatte gebildet wird.

17. Kraftfahrzeug-Baugruppe nach einem der vorhergehenden Ansprüche, **dadurch gekennzeichnet, daß** die Leiteranordnung (1) mindestens eine Befestigungsbahn (12) aufweist, die sich neben Leiterbahnen (11) der Leiteranordnung (1) erstreckt, und die den mindestens einen Befestigungsabschnitt (13) der Leiteranordnung (1) bildet.

18. Kraftfahrzeug-Baugruppe nach einem der Ansprüche 1 bis 16, **dadurch gekennzeichnet, daß** der mindestens eine Befestigungsabschnitt (13) der Leiteranordnung (1) durch eine Leiterbahn (11) der Leiteranordnung (1) gebildet wird.

19. Kraftfahrzeug-Baugruppe nach einem der Ansprüche 1 bis 16, **dadurch gekennzeichnet, daß** der mindestens eine Befestigungsabschnitt (14) der Leiteranordnung (1) durch einen Träger (10) der Leiteranordnung (1) gebildet wird.

20. Kraftfahrzeug-Baugruppe nach einem der vorhergehenden Ansprüche, **dadurch gekennzeichnet, daß** der mindestens eine Befestigungsabschnitt (13) der Leiteranordnung (1) gegenüber dem tragenden Element (2) isoliert ist.

21. Kraftfahrzeug-Baugruppe nach Anspruch 20, **dadurch gekennzeichnet, daß** eine Isolierung auf der Leiteranordnung (1) vorgesehen ist.

22. Kraftfahrzeug-Baugruppe nach Anspruch 20, **dadurch gekennzeichnet, daß** eine Isolierung auf dem tragenden Element (2) vorgesehen ist.

23. Bauteilverbindung mit
- einem tragenden Element (2) und
- einer an dem tragenden Element (2) befestigten Leiteranordnung (1), die zur Bestromung elektrischer Komponenten eines Fahrzeugs oder zur Signalübermittlung dient,
**dadurch gekennzeichnet,**
**daß** mindestens ein Befestigungsabschnitt (13, 14) der Leiteranordnung (1) und ein zugeordneter Befestigungsabschnitt (23) des tragenden Elementes (2) derart plastisch verformt sind, daß der eine Befestigungsabschnitt (13, 14) in einen Hinterschnitt des anderen Befestigungsabschnittes (23) eingreift.

24. Bauteilverbindung nach Anspruch 23, **gekennzeichnet durch** die kennzeichnenden Merkmale mindestens eines der Ansprüche 1 bis 22.

## Claims

1. Motor vehicle sub-assembly, more particularly sub-assembly for a motor vehicle door, with
- a supporting element (2) and
- a conductor arrangement (1) fixed on the supporting element and serving to supply current to electrical components of a vehicle or to send signals
**characterised in that**
at least one fixing section (13, 14) of the conductor arrangement (1) and an associated fixing section (23) of the supporting element (2) are plastically deformed so that the one fixing section (13, 14) engages in an undercut section of the other fixing section (23).

2. Motor vehicle sub-assembly according to claim 1 **characterised in that** the fixing sections (13, 23; 14, 23) engage in each other without forming a through opening.

3. Motor vehicle sub-assembly according to claim 1 or 2 **characterised in that** at least one fixing section (13) of the conductor arrangement (1) and an associated fixing section (23) of the supporting element (2) are plastically deformed so that the fixing section (23) of the supporting element (2) engages in the fixing section (13) of the conductor arrangement (1) so that the fixing section (13) of the conductor arrangement (1) engages at least in part round the fixing section (23) of the supporting element (2).

4. Motor vehicle sub-assembly according to one of the preceding claims, **characterised in that** at least one fixing section (13) of the conductor arrangement (1), an associated fixing section (23) of the supporting element (2) and a fixing section (51) of an additional element (5) are plastically deformed so that the three fixing sections (13, 23, 51) engage in each other.

5. Motor vehicle sub-assembly according to claim 4, **characterised in that** the additional element serves in a multi-function as a mechanical element of a function unit.

6. Motor vehicle sub-assembly according to claim 5 **characterised in that** the additional element (5) is formed additionally as fixing hook for a door element, more particularly a door inside trim.

7. Motor vehicle sub-assembly according to claim 5, **characterised in that** the additional element (5) is formed additionally as a holder for fixing a Bowden cable, a rod linkage or a cable.

8. Motor vehicle sub-assembly according to claim 5, **characterised in that** the additional element (5) is formed additionally as a holding or fixing element for a housing of a function unit, more particularly for an electronics housing.

9. Motor vehicle sub-assembly according to one of the preceding claims, **characterised in that** the conductor arrangement (1) is fixed on the supporting element (2) at a number of fixing points (3).

10. Motor vehicle sub-assembly according to one of the preceding claims, **characterised in that** the conductor arrangement (1) is connected to the supporting element (2) at at least one fixing point (3) by means of forced joining.

11. Motor vehicle sub-assembly according to one of claims 1 to 9, **characterised in that** the conductor arrangement (1) is connected to the supporting element (2) at at least one fixing point (3) by means of a stamped rivet (4).

12. Motor vehicle sub-assembly according to claim 11 **characterised in that** the stamped rivet (4) engages at the fixing point (3) into the two fixing sections (13, 23; 14, 23) without passing right through one of the fixing sections.

13. Motor vehicle sub-assembly according to claim 11 or 12 **characterised in that** the stamped rivet (4) is spread out so that it engage behind at least one of the fixing sections (13, 23; 14, 23).

14. Motor vehicle sub-assembly according to one of the preceding claims **characterised in that** the conductor arrangement (1) comprises several elongated conductor paths (11) arranged side by side.

15. Motor vehicle sub-assembly according to one of the preceding claims **characterised in that** the conductor arrangement (1) is formed by a flat conductor.

16. Motor vehicle sub-assembly according to one of claims 1 to 14, **characterised in that** the conductor arrangement (1) is formed by a flexible conductor plate.

17. Motor vehicle sub-assembly according to one of the preceding claims, **characterised in that** the conductor arrangement (1) has at least one fixing web (12) which extends next to the conductor paths (11) of the conductor arrangement (1) and which forms the at least one fixing section (13) of the conductor arrangement (1).

18. Motor vehicle sub-assembly according to one of claims 1 to 16, **characterised in that** the at least one fixing section (13) of the conductor arrangement (1) is formed by a conductor path (11) of the conductor arrangement (1).

19. Motor vehicle sub-assembly according to one of claims 1 to 16, **characterised in that** the at least one fixing section (14) of the conductor arrangement (1) is formed by a support (10) of the conductor arrangement (1).

20. Motor vehicle sub-assembly according to one of the preceding claims, **characterised in that** the at least one fixing section (13) of the conductor arrangement (1) is insulated from the supporting element (2).

21. Motor vehicle sub-assembly according to claim 20, **characterised in that** insulation is provided on the conductor arrangement (1).

22. Motor vehicle sub-assembly according to claim 20, **characterised in that** insulation is provided on the supporting element (2).

23. Connection of component parts with
- a supporting element (2) and
- a conductor arrangement (1) fixed on the supporting element (2) and serving to supply current to electrical components of a vehicle or to send signals
**characterised in that**,
at least one fixing section (13, 14) of the conductor arrangement (1) and an associated fixing section (23) of the supporting element (2) are plastically deformed so that the one fixing section (13, 14) engages in an undercut section of the other fixing section (23).

24. Connection of component parts according to claim 23 **characterised by** the characterising features of at least one of claims 1 to 22.

## Revendications

1. Groupe structurel pour véhicule automobile, notamment groupe structurel pour une porte de véhicule automobile, comprenant
- un élément de support (2) et
- un ensemble conducteur (1) fixé à l'élément de support (2) et servant à alimenter en courant des composants électriques d'un véhicule, ou à transmettre des signaux,
**caractérisé par le fait**
**qu'**au moins un tronçon de fixation (13, 14) de l'ensemble conducteur (1) et un tronçon de fixation associé (23) de l'élément de support (2) sont déformés plastiquement de façon telle que l'un (13, 14) des tronçons de fixation pénètre dans une contre-dépouille de l'autre tronçon de fixation (23).

2. Groupe structurel pour véhicule automobile, selon la revendication 1, **caractérisé par le fait que** les tronçons de fixation (13, 23 ; 14, 23) pénètrent l'un dans l'autre sans former un orifice de passage.

3. Groupe structurel pour véhicule automobile, selon la revendication 1 ou 2, **caractérisé par le fait qu'**un tronçon de fixation (13) de l'ensemble conducteur (1), et un tronçon de fixation associé (23) de l'élément de support (2), sont déformés plastiquement de façon telle que le tronçon de fixation (23) de l'élément de support (2) pénètre dans le tronçon de fixation (13) de l'ensemble conducteur (1), si bien que ledit tronçon de fixation (13) dudit ensemble conducteur (1) ceinture au moins partiellement ledit tronçon de fixation (23) dudit élément de support (2).

4. Groupe structurel pour véhicule automobile, selon l'une des revendications précédentes, **caractérisé par le fait qu'**au moins un tronçon de fixation (13) de l'ensemble conducteur (1), un tronçon de fixation associé (23) de l'élément de support (2), et un tronçon de fixation (51) d'un élément additionnel (5), sont déformés plastiquement de façon telle que les trois tronçons de fixation (13, 23, 51) pénètrent les uns dans les autres.

5. Groupe structurel pour véhicule automobile, selon la revendication 4, **caractérisé par le fait que** l'élément additionnel sert, en mode multifonctions, d'élément mécanique d'une unité fonctionnelle.

6. Groupe structurel pour véhicule automobile, selon la revendication 5, **caractérisé par le fait que** l'élément additionnel (5) est additionnellement réalisé comme un crochet de fixation destiné à un élément de porte, notamment un habillage intérieur de porte.

7. Groupe structurel pour véhicule automobile, selon la revendication 6, **caractérisé par le fait que** l'élément additionnel (5) est additionnellement réalisé comme un logement de consignation à demeure d'un ensemble Bowden, d'une tringlerie ou d'un câble.

8. Groupe structurel pour véhicule automobile, selon la revendication 5, **caractérisé par le fait que** l'élément additionnel (5) est additionnellement réalisé comme un élément de retenue ou de fixation destiné à un boîtier d'une unité fonctionnelle, notamment à un boîtier électronique.

9. Groupe structurel pour véhicule automobile, selon l'une des revendications précédentes, **caractérisé par le fait que** l'ensemble conducteur (1) est fixé à l'élément de support (2) dans une pluralité de zones de fixation (3).

10. Groupe structurel pour véhicule automobile, selon l'une des revendications précédentes, **caractérisé par le fait que** l'ensemble conducteur (1) est relié à l'élément de support (2) dans au moins une zone de fixation (3), au moyen d'assemblages traversants.

11. Groupe structurel pour véhicule automobile, selon l'une des revendications 1 à 9, **caractérisé par le fait que** l'ensemble conducteur (1) est relié à l'élément de support (2) dans au moins une zone de fixation (3), au moyen d'un rivet poinçonné (4).

12. Groupe structurel pour véhicule automobile, selon la revendication 11, **caractérisé par le fait que** le rivet poinçonné (4) pénètre dans les deux tronçons de fixation (13, 23 ; 14, 23) dans la zone de fixation (3), sans traverser intégralement l'un desdits tronçons de fixation.

13. Groupe structurel pour véhicule automobile, selon la revendication 11 ou 12, **caractérisé par le fait que** le rivet poinçonné (4) est déployé de façon telle qu'il emprisonne, par-derrière, au moins l'un des tronçons de fixation (13, 23 ; 14, 23).

14. Groupe structurel pour véhicule automobile, selon l'une des revendications précédentes, **caractérisé par le fait que** l'ensemble conducteur (1) comprend plusieurs pistes conductrices (11) s'étendant longitudinalement et agencées en juxtaposition.

15. Groupe structurel pour véhicule automobile, selon l'une des revendications précédentes, **caractérisé par le fait que** l'ensemble conducteur (1) est matérialisé par un conducteur aplati.

16. Groupe structurel pour véhicule automobile, selon l'une des revendications 1 à 14, **caractérisé par le fait que** l'ensemble conducteur (1) est matérialisé par une plaquette flexible à circuits imprimés.

17. Groupe structurel pour véhicule automobile, selon l'une des revendications précédentes, **caractérisé par le fait que** l'ensemble conducteur (1) présente au moins une piste de fixation (12) qui s'étend à côté de pistes conductrices (11) dudit ensemble conducteur (1) et qui matérialise le tronçon de fixation (13), prévu au minimum, dudit ensemble conducteur (1).

18. Groupe structurel pour véhicule automobile, selon l'une des revendications 1 à 16, **caractérisé par le fait que** le tronçon de fixation (13), prévu au minimum pour l'ensemble conducteur (1), est matérialisé par une piste conductrice (11) dudit ensemble conducteur (1).

19. Groupe structurel pour véhicule automobile, selon l'une des revendications 1 à 16, **caractérisé par le fait que** le tronçon de fixation (14), prévu au minimum pour l'ensemble conducteur (1), est matérialisé par un support (10) dudit ensemble conducteur (1).

20. Groupe structurel pour véhicule automobile, selon l'une des revendications précédentes, **caractérisé par le fait que** le tronçon de fixation (13), prévu au minimum pour l'ensemble conducteur (1), est isolé vis-à-vis de l'élément de support (2).

21. Groupe structurel pour véhicule automobile, selon la revendication 20, **caractérisé par le fait qu'**une isolation est prévue sur l'ensemble conducteur (1).

22. Groupe structurel pour véhicule automobile, selon la revendication 20, **caractérisé par le fait qu'**une isolation est prévue sur l'élément de support (2).

23. Solidarisation de pièces structurelles, comprenant
- un élément de support (2) et
- un ensemble conducteur (1) fixé à l'élément de support (2) et servant à alimenter en courant des composants électriques d'un véhicule, ou à transmettre des signaux,
**caractérisée par le fait**
**qu'**au moins un tronçon de fixation (13, 14) de l'ensemble conducteur (1) et un tronçon de fixation associé (23) de l'élément de support (2) sont déformés plastiquement de façon telle que l'un (13, 14) des tronçons de fixation pénètre dans une contre-dépouille de l'autre tronçon de fixation (23).

24. Solidarisation de pièces structurelles, selon la revendication 23, **caractérisée par** les spécificités des parties caractérisantes d'au moins l'une des revendications 1 à 22.
